# EUROPÄISCHE PATENTSCHRIFT

(11) **EP 3 697 714 B1**
(45) Veröffentlichungstag und Bekanntmachung des Hinweises auf die Patenterteilung: **15.06.2022**
(21) Anmeldenummer: 18780140.2
(22) Anmeldetag: 05.10.2018
(51) Int. Cl.: B66B 7/06, B66B 15/04

(54) **AUFZUGSANLAGE MIT UMLENKELEMENTEN MIT VERSCHIEDENEN RILLENGEOMETRIEN**
LIFT ASSEMBLY WITH DIVERTING PULLEYS WITH DIFFERENT GROOVE GEOMETRIES
INSTALLATION D'ASCENSEUR DOTÉE DE POULIES DE DÉTOUR AVEC DIFFÉRENTES GÉOMÉTRIES DE RAINURE

(30) Priorität: 17.10.2017 EP 17196734
(43) Veröffentlichungstag der Anmeldung: 26.08.2020
(73) Patentinhaber: Inventio AG, 6052 Hergiswil (CH)
(72) Erfinder: BERNER, Oliver, 6210 Sursee (CH); DOLD, Florian, 5620 Bremgarten (CH)
(74) Vertreter: Inventio AG
(86) Internationale Anmeldenummer: PCT/EP2018/077195
(87) Internationale Veröffentlichungsnummer: WO 2019/076655

(56) Entgegenhaltungen:
- EP-A1- 1 096 176
- EP-A1- 1 535 875
- EP-A2- 1 396 458
- US-A1- 2015 024 891
- US-B2- 7 040 456

## Beschreibung

Die Erfindung betrifft eine Aufzugsanlage nach Anspruch 1.

In Aufzugsanlagen werden vermehrt anstelle von Stahlseilen Riemen zum Tragen der Kabine und des Gegengewichtes eingesetzt, welche zum Verfahren der Kabine und des Gegengewichtes über eine Treibscheibe eines Motors geführt und somit angetrieben sind. Ferner werden die Riemen in der Aufzugsanlage über eine Vielzahl anderer Umlenkelemente, insbesondere Rollen, geführt, beispielsweise Rollen, die an der Kabine oder dem Gegengewicht befestigt sind.

Für das Antreiben des Riemens über die Treibscheibe ist es notwendig, dass zwischen dem Riemen und der Treibscheibe eine ausreichende Traktion besteht. Diese Traktion wiederum hängt massgeblich von zwei Faktoren, nämlich zum einen dem Zusammenspiel der Geometrien der Rillen der Treibscheibe und der Rippen des Riemens und zum anderen vom Reibwert zwischen dem Riemenmaterial und dem Material der Treibscheibe, ab. Werden die Riemen jedoch mit einem Schrägzug belastet, so entstehen zwischen den Riemen und den Umlenkelementen Aufstiegskräfte, welche dazu führen können, dass die Riemen innerhalb der Rillen der Umlenkelemente aufsteigen und es im Extremfall dazu kommen kann, dass die Riemen aus den Rollen hinausspringen und ein sogenannter Riemensprung entsteht, welcher zu einer Verschlechterung der Laufeigenschaften der Riemen auf den Umlenkelementen führt. Auch diese Aufstiegskräfte hängen wiederum von der Geometrie der Rippen des Riemens, der Geometrie der Rillen der Umlenkelemente sowie von dem Reibwert zwischen dem Riemenmaterial und dem Material der Umlenkelemente ab.

Bei bekannten Aufzugsanlagen werden bei allen Umlenkelementen, also insbesondere bei der Treibscheibe und den anderen Rollen, auf deren Laufflächen Rillen derselben Geometrie vorgesehen, so dass immer ein Kompromiss zwischen einer ausreichenden Traktion auf der einen Seite und auf der anderen Seite einem nicht zu grossen Riemensprungrisiko getroffen werden muss. Dies hat den Nachteil, dass entweder nur eine geringe Traktion übertragen werden kann oder das Riemensprungrisiko verhältnismässig gross ist. Darüber hinaus ist hieran nachteilig, dass diejenigen Rillengeometrien, die für eine ausreichende Traktion benötigt werden, häufig einen relativ hohen Verschleiss an dem Riemen durch hohe lokale Kräfte bewirken.

Ein Riemen für Aufzugsanlagen ist beispielsweise aus US2015/02489 1, aus US 7,040,456 sowie EP1886958 bekannt. Aus EP1396458 ist eine Aufzugsanlage mit Riemen bekannt, welche mit unterschiedlichen Rillen auf den beiden Seiten ausgestattet sind und damit über unterschiedlich ausgebildete Umlenkelemente laufen.

Es ist Aufgabe der Erfindung, eine Aufzugsanlage sowie einen Riemen für Aufzugsanlagen anzugeben, bei denen auf der einen Seite eine ausreichende Traktion zum Bewegen der Kabine und des Gegengewichtes übertragen werden kann und dennoch ein geringer Verschleiss des Riemens und ein geringes Riemensprungrisiko bestehen.

Diese Aufgabe wird durch eine Aufzugsanlage mit den Merkmalen des Anspruchs 1 gelöst. Vorteilhafte Weiterbildungen der Erfindung sind in den abhängigen Ansprüchen angegeben.

Erfindungsgemäss weisen die Rillen des ersten Umlenkelementes eine erste Geometrie und die Rillen des zweiten Umlenkelementes eine von der ersten Geometrie verschiedene zweite Geometrie auf. Hierdurch wird erreicht, dass zwischen den beiden Umlenkelementen und der einen, mit Rippen versehenen Laufseite des Riemens unterschiedliche Kraftübertragungsmöglichkeiten bestehen. Somit kann bei gleichbleibender Rippengeometrie des Riemens bei dem einen Umlenkelement beispielsweise eine hohe Traktionskraft übertragen werden, bei dem anderen Umlenkelement dagegen die Geometrie derart ausgebildet sein, dass nur ein geringes Riemensprungrisiko besteht.

Insbesondere ist bei dem ersten Umlenkelement die erste Geometrie der Rillen derart gewählt, dass bei Querzug möglichst geringe Aufstiegskräfte entstehen und somit das Risiko eines Riemensprungs gering ist.

Bei dem zweiten Umlenkelement dagegen ist die zweite Geometrie der Rillen insbesondere derart gewählt, dass eine hohe Traktion zwischen dem Riemen und dem zweiten Umlenkelement besteht, so dass hierüber grosse Kräfte übertragen werden können und somit der Riemen angetrieben werden kann.

Die Zugträger sind insbesondere vollständig ausserhalb der Rippen angeordnet. Insbesondere sind die Rippen ausschliesslich aus dem Material gebildet, aus dem der Mantel besteht. Hierbei handelt es sich insbesondere um ein Polymer, beispielsweise PU oder EPDM.

Unter der Geometrie einer Rille wird insbesondere deren Profil im Querschnitt verstanden.

Bei dem ersten Umlenkelement wie auch bei dem zweiten Umlenkelement kann es sich insbesondere jeweils um eine Rolle oder eine Scheibe handeln.

Das erste Umlenkelement ist bei einer besonders bevorzugten Ausführungsform eine Rolle, wobei das zweite Umlenkelement bei dieser Ausführungsform eine Treibscheibe eines Motors zum Bewegen der Kabine und/oder des Gegengewichtes ist. In diesem Fall ist die Geometrie der Rillen der Treibscheibe derart ausgebildet, dass eine grosse Traktionskraft übertragen werden kann, wohingegen die Rillen des ersten Umlenkelementes, also der Rolle, derart ausgebildet sind, dass bei Querzug des Riemens nur geringe Aufstiegskräfte entstehen. Somit wird nur an der Stelle, an der eine hohe Traktion benötigt wird, also bei der Treibscheibe, auch wirklich diese hohe Traktion mit dem Nachteil des hohen Verschleisses des Riemens und des hohen Riemensprungrisikos erreicht, wohingegen bei allen anderen Umlenkelementen ein verschleissarmer Lauf des Riemens mit geringem Riemensprungrisiko besteht. So werden insgesamt der Riemenverschleiss und das Riemensprungrisiko verglichen mit Aufzugsanlagen, bei denen alle Umlenkelemente die Riemengeometrie der Treibscheibe aufweisen würden, erheblich reduziert.

Die erste und die zweite Geometrie sind vorzugsweise derart ausgebildet, dass die Traktion zwischen dem zweiten Umlenkelement und dem Riemen grösser ist als zwischen dem ersten Umlenkelement und dem Riemen.

Bei einer besonders bevorzugten Ausführungsform der Erfindung weisen die Rillen des zweiten Umlenkelementes jeweils einen Unterschnitt auf, wohingegen die Rillen des ersten Umlenkelementes unterschnittsfrei ausgebildet sind. Unter dem unterschnittsfreien Ausbilden wird verstanden, dass die Rillen keinen Unterschnitt aufweisen.

Insbesondere sind die Geometrien des zweiten und des ersten Umlenkelementes derart ausgebildet, dass sie, abgesehen von dem Unterschnitt, identisch geformt sind.

Vorzugsweise sind die Geometrien der Rillen der beiden Umlenkelemente, abgesehen von dem Unterschnitt, komplementär zu der Geometrie der Rippen des Riemens ausgebildet.

Durch den Unterschnitt in den Rillen wird eine lokale Normalkrafterhöhung erzeugt, welche wiederum, insbesondere bei halbkreisförmigen, elliptischen oder kreissegmentförmigen Rippen eines Riemens, die Möglichkeit eröffnet, eine höhere Reibkraft zu übertragen.

Durch die lokale Normalkrafterhöhung ergibt sich eine Erhöhung der Pressung, welche zu einer höheren Schädigung des Riemenmaterials beim Laufen des Riemens durch die Rillen mit dem Unterschnitt führt.

Durch die Verwendung von Unterschnitten nur bei denjenigen Umlenkelementen, die auch tatsächlich eine hohe Traktionskraft übertragen müssen, wird die Schädigung des Riemens insgesamt minimiert. Ferner wird das Riemensprungrisiko reduziert.

Insbesondere weist in der Aufzugsanlage ausschliesslich die Treibscheibe die zweite Geometrie auf, wohingegen alle anderen Umlenkelemente Rillen mit der ersten Geometrie aufweisen.

Ferner wird durch die Unterschnitte erreicht, dass auch im Falle des Verlustes des Mantels des Riemens eine ausreichende Traktion zwischen den Zugträgern und der Riemenscheibe erreicht wird, um ein ungewolltes Bewegen der Aufzugskabine zu verhindern.

Bei einer bevorzugten Ausführungsform der Erfindung weisen die Rillen des zweiten Umlenkelementes mindestens teilweise eine reibwerterhöhende Beschichtung oder ein reibwerterhöhendes Gewebe auf. Hierdurch wird wiederum erreicht, dass zwischen denjenigen Umlenkelementen, bei denen eine hohe Traktion benötigt wird, eine entsprechend hohe Reibkraft übertragen werden kann, wohingegen bei den anderen Umlenkelementen eine geringere Traktionsfähigkeit und somit auch ein geringeres Riemensprungrisiko besteht.

Es ist besonders vorteilhaft, wenn der Querschnitt der Rippen des Riemens jeweils bogenförmig, kreissegmentförmig, halbkreisförmig oder ellipsensegmentförmig ist. Entsprechend sind die komplementär hierzu ausgebildeten Geometrien der Rippen des ersten und/oder zweiten Umlenkelementes, abgesehen von eventuellen Unterschnitten, ebenfalls bogenförmig, kreissegmentförmig, halbkreisförmig oder ellipsensegmentförmig ausgebildet.

Bei einer besonders bevorzugten Ausführungsform der Erfindung ist der Querschnitt der Rippen derart gewählt, dass sich eine bogenförmige Kontur ergibt. Diese bogenförmige Kontur hat zum einen den Vorteil, dass der Winkel relativ zur Ebene der Mittelachse mit zunehmendem Abstand kontinuierlich kleiner wird und somit eine Selbsthemmung bei einem Aufsteigen des Riemens in den Rillen eintritt, zum anderen aber eine, bei V-förmigen Rippen mit steilen Winkeln bestehende, Verklemmungsgefahr der Rippen in den Rillen der Umlenkelemente durch die bogenförmige Geometrie vermieden wird. Ferner kann durch die entsprechende Formgebung mit bogenförmigen Kontur eine hohe Traktion in Laufrichtung bei gleichzeitig geringer Aufstiegsanfälligkeit bei Schrägzug erreicht werden.

Bei einer besonders bevorzugten Ausführungsform werden kreissegmentförmige, insbesondere halbkreisförmige, Rippen verwendet, welche ebenfalls eine entsprechende Selbsthemmung durch den sich verändernden Winkel und eine geringe Klemmneigung aufweisen. Alternativ können auch ellipsenförmige Rippen verwendet werden. Es ist ebenso alternativ möglich, dass kreissegment- oder halbkreisförmige Rippen mit einer abgeflachten Oberseite verwendet werden, das heisst, dass die Spitzen der Rippen insbesondere eine plane Fläche aufweisen, welche vorzugsweise parallel zu der Ebene der Mittelachsen der Zugträger verläuft.

Weitere Merkmale und Vorteile der Erfindung ergeben sich aus der folgenden Beschreibung, welche die Erfindung anhand von Ausführungsbeispielen im Zusammenhang mit den beigefügten Figuren näher erläutert.

Es zeigen:
- Fig. 1: eine schematische, stark vereinfachte Darstellung einer Aufzugsanlage;
- Fig. 2: eine Schnittdarstellung eines Riemens gemäss einer ersten Ausführungsform;
- Fig. 3: einen Ausschnitt eines ersten Umlenkelementes der Aufzugsanlage nach Fig. 1;
- Fig. 4: einen Ausschnitt eines zweiten Umlenkelementes der Aufzugsanlage nach Fig. 1;
- Fig. 5: eine Schnittdarstellung eines Riemens gemäss einer zweiten Ausführungsform;
- Fig. 6: eine Schnittdarstellung eines Riemens gemäss einer dritten Ausführungsform;
- und Fig. 7: eine Schnittdarstellung eines Riemens gemäss einer vierten Ausführungsform.

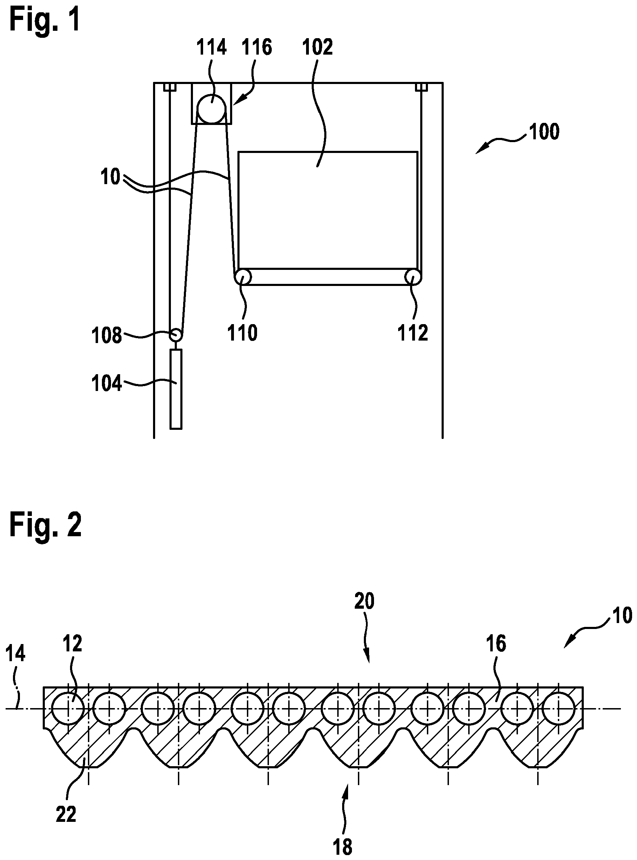

In Fig. 1 ist eine schematische, stark vereinfachte Darstellung einer Aufzugsanlage 100 gezeigt. Die Aufzugsanlage 100 weist eine Aufzugskabine 102 und ein Gegengewicht 104 auf, die über einen Riemen 10 getragen sind. Der Riemen 10 ist hierbei über mehrere Umlenkelemente geführt. Es gibt dabei zwei Arten von Umlenkelementen. Einerseits sind es Rollen 108, 110 sowie112, über welche der Riemen geführt wird. Andererseits ist der Riemen 10 über eine Treibscheibe 114 eines Motors 116 geführt, über den der Riemen 10 in seine Längsrichtung bewegt werden kann. Hierdurch kann die Position der Aufzugskabine 102 und des Gegengewichtes 104 innerhalb des Aufzugschachtes der Aufzugsanlage 100 verändert werden. Damit der Riemen über alle Umlenkelemente mit der einen Laufseite geführt werden kann, erfährt der Riemen zwischen zwei in entgegengesetzter Richtung umlenkender Umlenkelemente eine halbe Längsrotation um 180°. In der Darstellung erfolgt ein derartiger Twist zwischen der Rolle 108 und der Treibscheibe 114, sowie zwischen der Treibscheibe 114 und der Rolle 110.

In Fig. 2 ist eine Schnittdarstellung durch den Riemen 10 der Aufzugsanlage 100 gemäss Fig. 1 gezeigt.

Der Riemen 10 weist mehrere in Längsrichtung des Riemens 10 verlaufende Zugträger 12 auf, deren Längsachsen in einer gemeinsamen Mittelebene 14 liegen.

Bei den Zugträgern 12 handelt es sich insbesondere um Seile, vorzugsweise um Stahlseile. Alternativ kann es sich auch um Faserseile handeln.

Die Zugträger 12 sind in einem Mantel 16 eingebettet, welcher die Zugträger 12 vollständig umgibt und welcher insbesondere ein Polymer umfasst.

Der Riemen 10 weist eine erste Seite 18 und eine der ersten Seite gegenüberliegende zweite Seite 20 auf, wobei an der ersten Seite 18 mehrere Rippen 22 vorgesehen sind, deren Geometrie derart ausgebildet ist, dass sie im Profil einen halbkreisförmigen Querschnitt mit einer abgeflachten Spitze aufweisen.

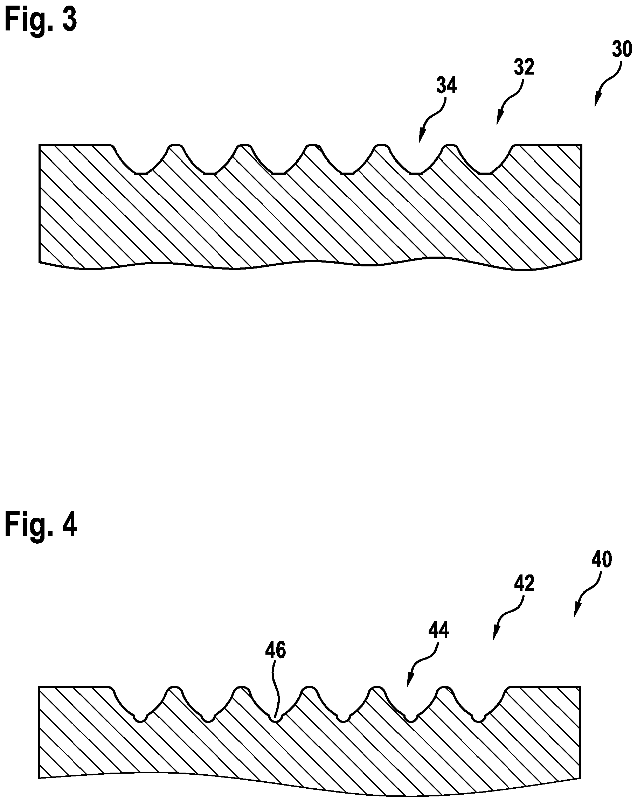

In Fig. 3 ist ein Ausschnitt aus einem ersten Umlenkelement 30 dargestellt, dessen Lauffläche 32 mehrere Rillen 34 aufweist. Diese Rillen 34 wiederum haben eine erste Geometrie, welche ebenfalls halbsegmentförmig mit abgeflachten Böden ist, und somit komplementär zur Geometrie der Rippen 22 des Riemens 10 ausgebildet ist.

Die in Fig. 3 dargestellte Rillengeometrie wird insbesondere für alle Rollen 108 bis 112 der Aufzugsanlage 100 verwendet, bei denen keine Traktionskraft übertragen werden muss, also insbesondere für alle Rollen 108 bis 112 mit Ausnahme der Treibscheibe 114.

In Fig. 4 ist ein Ausschnitt eines zweiten Umlenkelementes 40 dargestellt, welcher auf seiner Lauffläche 42 ebenso mehrere Rillen 44 aufweist, welche eine von der ersten Geometrie der Rillen 34 des ersten Umlenkelementes 30 abweichende zweite Geometrie aufweisen. Diese zweite Geometrie ist insbesondere derart ausgebildet, dass das Profil der Rillen 44 ebenfalls halbkreisförmig ist, jedoch an der Bodenseite jeweils ein Unterschnitt 46 vorgesehen ist. Somit sind insbesondere die erste und die zweite Geometrie weitestgehend identisch ausgebildet, eben genau mit Ausnahme dieser Unterschnitte 46.

Bei dieser zweiten Geometrie, die in Fig. 4 dargestellt ist, handelt es sich insbesondere um diejenige Geometrie der Rillen, die bei der Treibscheibe 114 verwendet wird.

Durch die Unterschnitte wird eine lokale Normalkrafterhöhung erreicht, wodurch die Traktionsfähigkeit erhöht wird, so dass von der Treibscheibe grosse Kräfte auf den Riemen, welche für das Bewegen der Kabine 102 und des Gegengewichtes 104 notwendig sind, übertragen werden können.

Auf der anderen Seite weist die erste Geometrie des ersten Umlenkelementes 30, also insbesondere alle Rollen 108 bis 112 mit Ausnahme der Treibscheiben 114, den Vorteil auf, dass der Riemen 10 durch diese Geometrie weniger geschädigt wird und dass die Gefahr eines Riemensprungs beim Auftreten von Querzug auf den Riemen 10 reduziert wird.

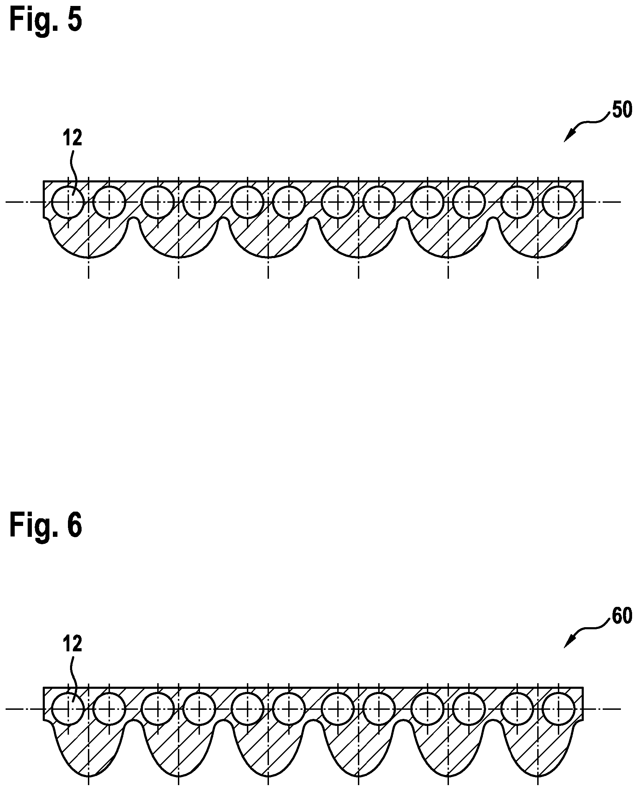

In Fig. 5 ist eine Schnittdarstellung durch einen Riemen 50 gemäss einer zweiten Ausführungsform dargestellt. Im Unterschied zu dem Riemen gemäss der ersten Ausführungsform gemäss der Fig. 2 weisen die halbkreisförmigen Rippen keine Abflachungen an ihren Spitzen auf.

In Fig. 6 ist eine Schnittdarstellung durch einen Riemen 60 gemäss einer dritten Ausführungsform dargestellt, wobei anstatt von halbkreisförmigen Rippen ellipsensegmentförmige Rippen vorgesehen sind.

Die Geometrien der Rillen 34, 44 der Umlenkelemente 30, 40 sind insbesondere wiederum im Wesentlichen komplementär zu der Geometrie der Rippen des Riemens 50 bzw. 60 ausgebildet, mit Ausnahme, dass beim zweiten Umlenkelement 40 wiederum Unterschnitte 46 vorgesehen sind.

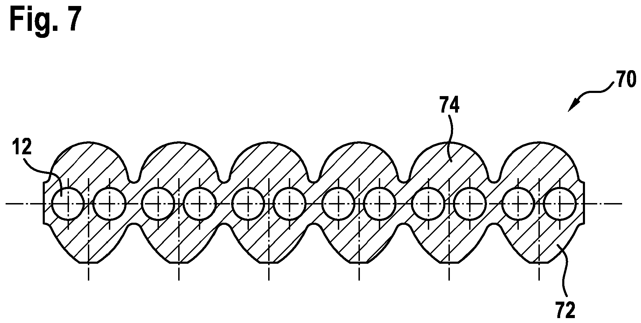

In Fig. 7 ist eine Schnittdarstellung durch einen Riemen 70 gemäss einer vierten Ausführungsform gezeigt. Bei dem Riemen 70 sind sowohl an der ersten Seite 18 als auch an der zweiten Seite 20 eine gleiche Anzahl von Rippen 72 bzw. 74 vorgesehen, wobei jedoch die Geometrien der Rippen 72, 74 an den beiden Seiten 18, 20 voneinander verschieden sind. Hierdurch wird erreicht, dass, je nachdem, welche Seite 18. 20 und somit welche Rippengeometrie mit den Rillen eines Umlenkelementes in Kontakt ist, unterschiedliche Kraftübertragungseigenschaften erreicht werden. Mit diesem Riemen kann auf den Twist zwischen zwei entgegengesetzt umlenkenden Umlenkelementen verzichtet werden.

### B ezugszeichenliste

- 10, 50, 60, 70: Riemen
- 12: Zugträger
- 14: Mittelebene
- 16: Mantel
- 18,20: Seite
- 22, 72, 74: Rippe
- 30, 40: Umlenkelement
- 32,42: Lauffläche
- 34, 44: Rille
- 46: Unterschnitt
- 100: Aufzugsanlage
- 102: Kabine
- 104: Gegengewicht
- 108, 110, 112: Rolle
- 114: Treibscheibe
- 116: Motor

## Patentansprüche

1. Aufzugsanlage mit einer Kabine (102) und/oder einem Gegengewicht (104), einem Riemen (10, 50, 60, 70) zum Tragen der Kabine (102) und/oder des Gegengewichtes (104), einem ersten Umlenkelement (30, 108, 110, 112), über das der Riemen (10, 50, 60, 70) geführt ist, und mit einem zweiten Umlenkelement (40, 114), über das der Riemen (10, 50, 60, 70) geführt ist,
wobei der Riemen (10, 50, 60, 70) mehrere in Längsrichtung des Riemens (10, 50, 60, 70) verlaufenden Zugträger (12), und einen Mantel (16), in den die Zugträger (12) eingebettet sind, aufweist,
wobei der Riemen (10, 50, 60, 70) eine erste Seite (18) und eine der ersten Seiten (18) gegenüberliegende zweite Seite (20) aufweist, wobei der Riemen mit der ersten Seite sowohl über das erste wie auch das zweite Umlenkelement geführt ist, und
wobei zumindest die erste Seite (18) mehrere in Längsrichtung des Riemens (10, 50, 60, 70) verlaufende Rippen (22, 72, 74) aufweist,
wobei sowohl das erste wie auch das zweite Umlenkelement (30, 40, 108, 110, 112, 114) jeweils mehrere Rillen (34, 44) aufweisen, in welche die Rippen (22, 72, 74) der ersten Seite des Riemens (10, 50, 60, 70) eingreifen,
**dadurch gekennzeichnet, dass** die Rillen (34) des ersten Umlenkelements (30, 108, 110, 112) eine erste Geometrie und die Rillen (44) des zweiten Umlenkelements (40, 114) eine von der ersten Geometrie verschiedene zweite Geometrie aufweisen.

2. Aufzugsanlage (100) nach Anspruch 1, **dadurch gekennzeichnet, dass** das erste Umlenkelement (30, 108, 110, 112) eine Rolle oder eine Scheibe ist.

3. Aufzugsanlege (100) nach Anspruch 1 oder 2, **dadurch gekennzeichnet, dass** das zweite Umlenkelement (40, 114) eine Rolle oder eine Scheibe ist.

4. Aufzugsanlage (100) nach Anspruch 1, **dadurch gekennzeichnet, dass** das erste Umlenkelement (30, 108, 110, 112) eine Rolle ist, und dass das zweite Umlenkelement (40, 114) eine Treibscheibe eines Motors (116) zum Bewegen der Kabine (102) und/oder des Gegengewichtes (104) ist.

5. Aufzugsanlage (100) nach einem der vorhergehenden Ansprüche, **dadurch gekennzeichnet, dass** die erste und die zweite Geometrie derart ausbildet sind, dass die Traktion zwischen dem zweiten Umlenkelement (40, 114) und dem Riemen (10, 50, 60, 70) grösser ist als zwischen dem ersten Umlenkelement (30, 108, 110, 112) und dem Riemen (10, 50, 60, 70).

6. Aufzugsanlage (100) nach einem der vorhergehenden Ansprüche, **dadurch gekennzeichnet, dass** die Rillen (44) des zweiten Umlenkelements (40, 114) jeweils einen Unterschnitt (46) aufweisen, wohingegen die Rillen (34) des ersten Umlenkelements (34, 108, 110, 112) unterschnittsfrei ausgebildet sind.

7. Aufzugsanlage (100) nach einem der vorhergehenden Ansprüche, **dadurch gekennzeichnet, dass** die Rillen (44) des zweiten Umlenkelements (40, 114) zumindest teilweise eine reibwerterhöhende Beschichtung oder ein reibwerterhöhendes Gewebe aufweisen.

8. Aufzugsanlage (100) nach einem der vorhergehenden Ansprüche, **dadurch gekennzeichnet, dass** der Querschnitt der Rippen (22, 72, 74) des Riemens (10, 50, 60, 70) jeweils bogenförmig, kreissegmentförmig, halbkreisförmig oder ellipsensegmentförmig ist.

9. Aufzugsanlage (100) nach einem der vorhergehenden Ansprüche, **dadurch gekennzeichnet, dass** die Rillen (34, 44) des ersten und/oder des zweiten Umlenkelements zumindest in einen Teilbereich komplementär zu den Rippen (22, 72, 74) des Riemens (10, 50, 60, 70) ausgebildet sind.

## Claims

1. Elevator system comprising a cabin (102) and/or a counterweight (104), a belt (10, 50, 60, 70) for supporting the cabin (102) and/or the counterweight (104), a first deflecting element (30, 108, 110, 112), over which the belt (10, 50, 60, 70) is guided, and a second deflecting element (40, 114), over which the belt (10, 50, 60, 70) is guided,
wherein the belt (10, 50, 60, 70) comprises a plurality of tension-bearing elements (12) running in the longitudinal direction of the belt (10, 50, 60, 70), and a sheath (16), in which the tension-bearing elements (12) are embedded,
wherein the belt (10, 50, 60, 70) has a first side (18) and a second side (20) opposite the first side (18), wherein the belt is guided with the first side over both the first and the second deflecting element, and
wherein at least the first side (18) has a plurality of ribs (22, 72, 74) running in the longitudinal direction of the belt (10, 50, 60, 70),
wherein both the first and second deflecting element (30, 40, 108, 110, 112, 114) have a plurality of grooves (34, 44), with which the ribs (22, 72, 74) of the first side of the belt (10, 50, 60, 70) mesh,
**characterized in that** the grooves (34) of the first deflecting element (30, 108, 110, 112) have a first geometry, and the grooves (44) of the second deflecting element (40, 114) have a second geometry different from the first geometry.

2. Elevator system (100) according to claim 1, **characterized in that** the first deflecting element (30, 108, 110, 112) is a roller or a disc.

3. Elevator system (100) according to claim 1 or 2, **characterized in that** the second deflecting element (40, 114) is a roller or a disc.

4. Elevator system (100) according to claim 1, **characterized in that** the first deflecting element (30, 108, 110, 112) is a roller, and that the second deflecting element (40, 114) is a traction sheave of a motor (116) for moving the cabin (102) and/or the counterweight (104).

5. Elevator system (100) according to one of the previous claims, **characterized in that** the first and the second geometry are designed such that the traction between the second deflecting element (40, 114) and the belt (10, 50, 60, 70) is greater than between the first deflecting element (30, 108, 110, 112) and the belt (10, 50, 60, 70).

6. Elevator system (100) according to one of the previous claims, **characterized in that** the grooves (44) of the second deflecting element (40, 114) each have an undercut (46), whereas the grooves (34) of the first deflecting element (34, 108, 110, 112) are designed in an undercut-free manner.

7. Elevator system (100) according to one of the previous claims, **characterized in that** the grooves (44) of the second deflecting element (40, 114) have at least to some extent a coating or a tissue that increases the friction coefficient.

8. Elevator system (100) according to one of the previous claims, **characterized in that** the cross-section of the ribs (22, 72, 74) of the belt (10, 50, 60, 70) is each arch-shaped, circle-segment -shaped, semicircular, or ellipse segment-shaped.

9. Elevator system (100) according to one of the previous claims, **characterized in that**, at least in a portion, the grooves (34, 44) of the first and/or the second deflecting element are designed to be complementary to the ribs (22, 72, 74) of the belt (10, 50, 60, 70).

## Revendications

1. Installation d'ascenseur comportant une cabine (102) et/ou un contrepoids (104), une courroie (10, 50, 60, 70) permettant de porter la cabine (102) et/ou le contrepoids (104), un premier élément de renvoi (30, 108, 110, 112) sur lequel est guidée la courroie (10, 50, 60, 70), et comportant un second élément de renvoi (40, 114) sur lequel est guidée la courroie (10, 50, 60, 70),
dans laquelle la courroie (10, 50, 60, 70) présente plusieurs supports de traction (12) s'étendant dans la direction longitudinale de la courroie (10, 50, 60, 70), et un boîtier (16) dans lequel sont intégrés les supports de traction (12),
dans laquelle la courroie (10, 50, 60, 70) présente un premier côté (18) et un second côté (20) opposé au premier côté (18), la courroie étant guidée à la fois sur le premier et sur le second éléments de renvoi au moyen du premier côté, et
dans laquelle au moins le premier côté (18) présente plusieurs nervures (22, 72, 74) s'étendant dans la direction longitudinale de la courroie (10, 50, 60, 70),
dans laquelle à la fois le premier et le second éléments de renvoi (30, 40, 108, 110, 112, 114) présentent respectivement plusieurs rainures (34, 44) dans lesquelles les nervures (22, 72, 74) du premier côté de la courroie (10e, 50, 60, 70) viennent en prise, **caractérisée en ce que** les rainures (34) du premier élément de renvoi (30, 108, 110, 112) présentent une première géométrie et les rainures (44) du second élément de renvoi (40, 114) présentent une seconde géométrie différente de la première géométrie.

2. Installation d'ascenseur (100) selon la revendication 1, **caractérisée en ce que** le premier élément de renvoi (30, 108, 110, 112) est un galet ou un disque.

3. Installation d'ascenseur (100) selon la revendication 1 ou 2, **caractérisée en ce que** le second élément de renvoi (40, 114) est un galet ou un disque.

4. Installation d'ascenseur (100) selon la revendication 1, **caractérisée en ce que** le premier élément de renvoi (30, 108, 110, 112) est un galet, et que le second élément de renvoi (40, 114) est une poulie motrice d'un moteur (116) permettant de déplacer la cabine (102) et/ou le contrepoids (104).

5. Installation d'ascenseur (100) selon l'une des revendications précédentes, **caractérisée en ce que** la première et la seconde géométries sont conçues de telle manière que la traction entre le second élément de renvoi (40, 114) et la courroie (10, 50, 60, 70) est plus grande qu'entre le premier élément de renvoi (30, 108, 110, 112) et la courroie (10, 50, 60, 70).

6. Installation d'ascenseur (100) selon l'une des revendications précédentes, **caractérisée en ce que** les rainures (44) du second élément de renvoi (40, 114) présentent respectivement une contre-dépouille (46), tandis que les rainures (34) du premier élément de renvoi (34, 108, 110, 112) sont conçues sans contre-dépouilles.

7. Installation d'ascenseur (100) selon l'une des revendications précédentes, **caractérisée en ce que** les rainures (44) du second élément de renvoi (40, 114) présentent au moins partiellement un revêtement augmentant le frottement ou un tissu augmentant le frottement.

8. Installation d'ascenseur (100) selon l'une des revendications précédentes, **caractérisée en ce que** la section transversale des nervures (22, 72, 74) de la courroie (10, 50, 60, 70) est respectivement arquée, en segment circulaire, semi-circulaire ou en segment elliptique.

9. Installation d'ascenseur (100) selon l'une des revendications précédentes, **caractérisée en ce que** les rainures (34, 44) du premier et/ou du second éléments de renvoi sont conçues complémentaires aux nervures (22, 72, 74) de la courroie (10, 50, 60, 70) dans au moins une zone partielle.
